# EUROPÄISCHE PATENTSCHRIFT

(11) **EP 0 991 535 B1**
(45) Veröffentlichungstag und Bekanntmachung des Hinweises auf die Patenterteilung: **07.11.2001**
(21) Anmeldenummer: 98940093.2
(22) Anmeldetag: 30.06.1998
(51) Int. Cl.: B60G 17/02

(54) **FEDERUNGSSYSTEM**
SUSPENSION SYSTEM
SYSTEME DE SUSPENSION

(30) Priorität: 30.06.1997 DE 19727819
(43) Veröffentlichungstag der Anmeldung: 12.04.2000
(73) Patentinhaber: FORSCHUNGSINSTITUT FÜR KRAFTFAHRWESEN UND FAHRZEUGMOTOREN STUTTGART, D-70569 Stuttgart (DE)
(72) Erfinder: HAKEN, Karl-Ludwig, D-71116 Gästringen (DE)
(74) Vertreter: Feldkamp, Rainer, Dipl.-Ing.
(86) Internationale Anmeldenummer: EP9803990
(87) Internationale Veröffentlichungsnummer: WO9901305

(56) Entgegenhaltungen:
- WO-A-93/22150
- DE-A- 2 538 103
- DE-A- 3 734 698
- DE-A- 3 734 724
- DE-A- 4 317 510
- FR-A- 2 100 284

## Beschreibung

Die vorliegende Erfindung betrifft ein Federungssystem gemäß dem Oberbegriff des Patentanspruchs 1.

Ein derartiges Federungssystem ist aus der DE-A-3 734 724 bekannt. Das dort beschriebene Federungssystem betrifft Kraftfahrzeuge mit Federelementen in Form von zum Beispiel Federdämpfern, die jeweils mit einem Ende raumfest am Fahrzeugaufbau und mit dem anderen Ende über verstellbare Zwischenglieder, nach Art von Verschiebeschlitten oder Schwenkhebeln, verstellbar am Radführungslenker angelenkt sind. An den Zwischengliedern greifen passive, d.h. ohne äußere Energiezufuhr arbeitende, Stellglieder nach Art von Führungslenkern oder Seiltrieben an, die jeweils derart ausgebildet und räumlich angeordnet sind, daß selbsttätig mit einem Ausfedern oder Weiterausfedern eines Radführungslenkers eine Verkleinerung und mit einem Einfedern und Weitereinfedern eines Radführungslenkers eine Vergrößerung des wirksamen Federelementhebelarms des an ihm angelenkten Federelementes verbunden ist.

Aus der DE-A-37 34 698 ist ein Federungssystem für eine Kraftfahrzeugachse mit schwenkbar am Fahrzeugaufbau angelenkten Radführungslenkern in Form von Schräg- oder Längslenkern bekannt, die im Bereich ihrer Lenkerdrehachse durch eine torsionsweiche Querstrebe miteinander verbunden sind. Die der Fahrzeugfederung dienenden Federdämpfer sind mit ihrem einen Ende ortsfest am Fahrzeugaufbau angelenkt und mit ihrem radführungslenkerseitigen Ende an einem auf dem Radführungslenker schwenkbar angeordneten Schwenkhebel, dessen Verschwenken eine Änderung des wirksamen Federhebelarms zur Folge hat. Das Verschwenken der Schwenkhebel wird durch eine an beiden Schwenkhebeln der Achse angreifende Gestängeanordnung bewirkt, die derart bemessen und angeordnet ist, daß selbsttätig bei einem gleichsinnigen Ein- oder Ausfedern der Fahrzeugräder im wesentlichen keine Verschwenkung der Schwenkhebel auftritt, bei einem gegensinnigen Ein- bzw. Ausfedern dagegen ein Verschwenken des mit dem einfedernden Radführungslenker verbundenen Schwenkhebels in Richtung einer Vergrößerung des wirksamen Federhebelarms und ein Verschwenken des mit dem ausfedernden Radführungslenker verbundenen Schwenkhebels in Richtung einer Verkleinerung des wirksamen Federhebelarms bewirkt wird.

Aus der DE-25 38 103 A1 ist ein Federungssystem bekannt bei dem ein Federelement, insbesondere für die Abfederung von Fahrzeugen, verwendet wird, bei welchem ein unterschiedlich belastbares Fahrgestell über Federelemente an Rädern aufgehängt ist, wobei das Federelement mindestens eine Schraubenfeder, eine Gummifeder oder eine sonstige Feder enthält, welche mit ihren Enden an zwei um eine gemeinsame Drehachse dreheinstellbaren Scheiben verankert ist, wobei die Federachse im Verhältnis zu der Scheibenachse exzentrisch verläuft, und jede drehbare Scheibe mit je einer ihr zugeordneten Festscheibe über Kugellager verbunden ist, wobei die Festscheiben an den gegeneinander anzufedernden Gegenständen befestigt sind.

Somit werden bei diesen Vorrichtungen die Federungseigenschaften des Federungssystems beeinflußt, indem die wirksame Länge eines Hebelarmes, mit dem das Federelement zur Abstützung auf ein schwenkbares Teil um dessen Schwenkachse einwirkt, verändert wird.

Der vorliegenden Erfindung liegt die Aufgabe zugrunde, ein Federungssystem der eingangs genannten Art zu schaffen, das sich bei einfachem Aufbau automatisch an den Beladungszustand anpaßt.

Diese Aufgabe wird durch die im kennzeichnenden Teil des Patentanspruchs 1 angegebenen Merkmale gelöst.

Vorteilhafte Weiterbildungen und Ausgestaltungen der Erfindung ergeben sich aus den Unteransprüchen.

Bei dem erfindungsgemäßen Federungssystem ist ein Kraftübertragungselement vorgesehen, das Kräfte, die ein zunehmendes und/oder abnehmendes Einfedern des Rades verursachen, auf das Stellelement überträgt, um die Länge des wirksamen Hebelarmes derart zu verändern, daß dieser bei steigender Belastung verlängert wird, während er bei sinkender Belastung verkürzt wird.

Das Stellelement ist durch einen Schwenkarm gebildet, dessen eines Ende um eine zweite Schwenkachse schwenkbar mit dem Lenker in Verbindung steht, wobei das zweite Ende des Dämpferund/oder Federelementes mit dem zweiten Ende dieses Schwenkarmes verbunden ist.

Das Kraftübertragungselement erstreckt sich dabei zwischen dem Fahrzeugaufbau und dem Schwenkarm und weist eine variable Länge auf. Weiterhin verfügt es über eine Feststelleinrichtung, die für die Zeit ihrer Aktivierung eine Längenveränderung des Kraftübertragungselementes verhindert.

Der Schwenkarm weist eine lösbare Arretiereinrichtung auf, die im gelösten Zustand ein Schwenken des Schwenkarmes um die zweite Schwenkachse ermöglicht, während sie im arretierten Zustand ein Schwenken des Schwenkarms um die zweite Schwenkachse verhindert.

Weiterhin ist vorzugsweise zwischen dem Anlenkpunkt des ersten Endes des Dämpfer- und/oder Federelementes und der Stelle, an der die Verlängerung der zweiten Schwenkachse eine den Anlenkpunkt enthaltende horizontale Ebene schneidet, ein Abstand in Längsrichtung des Lenkers und ein Abstand in Querrichtung des

Lenkers vorgesehen, wobei zumindest einer dieser Abstände im entladenen Zustand des Fahrzeugs ungleich Null ist. Dabei ist vorzugsweise zumindest einer der Abstände derart ungleich Null, daß das einer Schwenkung des Schwenkarmes entgegenwirkende Moment kleiner ist, als wenn beide Abstände gleich Null sind.

Bei dieser Ausführungsform ist es beispielsweise möglich, das einer Schwenkung entgegenwirkende Moment durch ein entsprechendes Ein- oder Ausfedern des Dämpfer- und/oder Federelementes zu verringern.

Zur ausführlicheren Erläuterung wird nachfolgend eine spezielle Ausführungsform des erfindungsgemäßen Federungssystems anhand einer Zeichnung beschrieben, die eine perspektivische, schematische Ansicht eines Fahrzeugslängslenkers zeigt, der mit einer Ausführungsform des erfindungsgemäßen Federungssystems ausgestattet ist.

Das dargestellte Federungssystem weist einen um eine erste Schwenkachse 3 schwenkbar am Fahrzeugaufbau 4 festgelegten Lenker 2 auf. Am freien Ende des Lenkers 2 ist zumindest ein Rad 1 drehbar gelagert. Bei der dargestellten Ausführungsform ist lediglich ein Dämpfer- und/oder Federelement 5 vorgesehen, von dem ein erstes Ende mit einem Anlenkpunkt am Fahrzeugaufbau in Verbindung steht, während das zweite Ende mit dem Lenker 2 über ein Stellelement in Verbindung steht, das in diesem Fall durch einen Schwenkarm 6 gebildet ist.

Durch ein Schwenken des Schwenkarmes 6 wird die wirksame Länge des Hebelarmes verändert, mit dem das Dämpfer- und/oder Federelement 5 zur Abstützung auf den Lenker 2 um dessen Schwenkachse 3 einwirkt. Durch die Veränderung der Länge des Hebelarmes werden die Federungseigenschaften des Federungssystems beeinflußt.

Um das Federungssystem an den Beladungszustand des Kraftfahrzeuges anpassen zu können, werden die Kräfte, die ein zunehmendes und/oder abnehmendes Einfedern des Rades 1 verursachen, über ein Kraftübertragungselement 9 auf den Schwenkarm 6 übertragen, um die Länge des wirksamen Hebelarmes derart zu verändern, daß dieser bei steigender Belastung verlängert wird, während er bei sinkender Belastung verkürzt wird.

Der Schwenkarm 6 ist um dessen eines Ende um eine zweite Schwenkachse 7 schwenkbar mit dem Lenker 2 verbunden, wobei das zweite Ende des Dämpfer und/oder Federelementes 5 mit dem zweiten Ende des Schwenkarmes 6 in Verbindung steht.

Das sich zwischen dem Fahrzeugaufbau 4 und dem Schwenkarm 6 erstreckende Kraftübertragungselement 9 ist teleskopartig und weist deshalb eine variable Länge auf.

Wie dies nachfolgend noch ausführlicher erläutert wird, ist eine Feststelleinrichtung 10 vorgesehen, die für die Zeit ihrer Aktivierung eine Längenveränderung des Kraftübertragungselementes 9 verhindert.

Bei der dargestellten Ausführungsform ist eine lösbare Arretiereinrichtung 8 im Bereich der zweiten Schwenkachse 7 vorgesehen. Diese dient dazu, ein Schwenken des Schenkarmes 6 um die zweite Schwenkachse 7 im entarretierten Zustand zu ermöglichen und ein derartiges Schwenken im arretierten Zustand zu verhindern.

Um das erfindungsgemäße Federungssystem beispielsweise während des Beladens an den Beladungszustand anzupassen, wird das Kraftübertragungselement 9 durch die Feststelleinrichtung 10 auf eine feste Länge eingestellt, und die Arretiereinrichtung 8 wird gelöst, um ein Schwenken des Schwenkarmes 6 um die zweite Schwenkachse 7 zu ermöglichen.

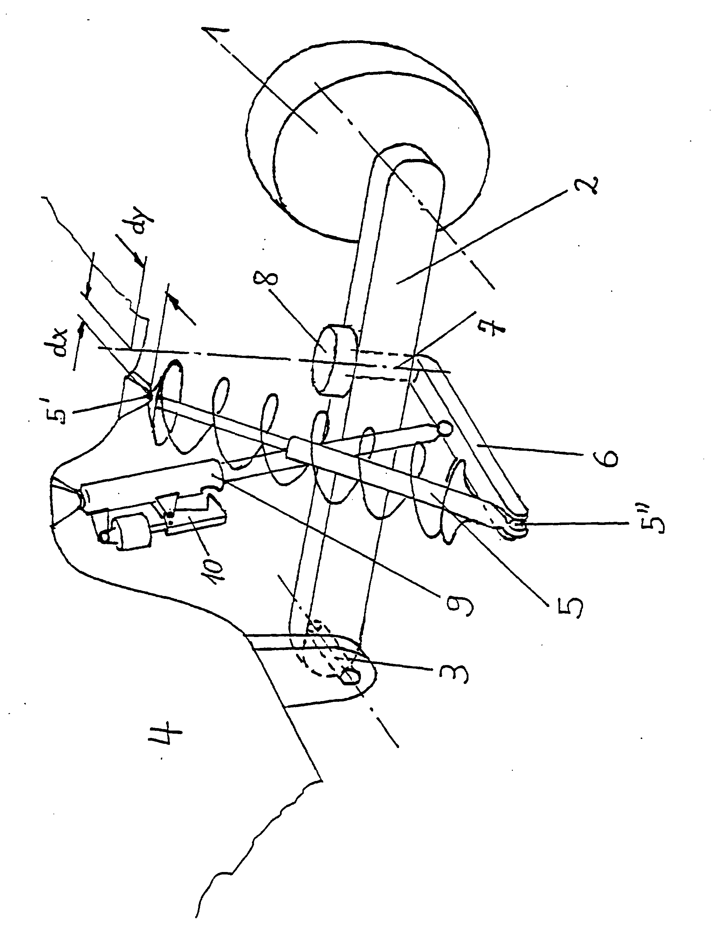

Die durch eine zunehmende Beladung entstehenden Kräfte werden durch das Kraftübertragungselement 9 derart auf den Schwenkarm 6 übertragen, daß, bezogen auf die Zeichnung, dessen unteres Ende nach rechts wandert, wodurch der wirksame Hebelarm verlängert und die Federung härter wird. Die Feststelleinrichtung 10 ist vorzugsweise aktiviert, wenn die Arretiereinrichtung 8 gelöst ist, und umgekehrt.

Die Aktivierung und/oder Deaktivierung der Feststelleinrichtung 10 und die Arretierung bzw. Entarretierrung der Arretiereinrichtung 8 erfolgt aus Sicherheitsgründen vorzugsweise automatisch in Abhängigkeit von einem oder mehreren Betriebszuständen des Fahrzeuges. Unter Betriebszuständen ist hierbei beispielsweise die Betätigung eines speziellen Bedienelementes, der Zustand einer Zündschloßstellung, der offene und/oder geschlossene Zustand von Türen bzw. Ladeluken, die Betätigung einer Feststellbremse, die Beladung des Fahrzeuges und insbesondere die Geschwindigkeit des Fahrzeuges zu verstehen.

Um die einer Schwenkung des Schwenkarmes 6 entgegenstehenden Momente so klein wie möglich zu halten, sind die Bestandteile des erfindungsgemäßen Federungssystems vorzugsweise derart zueinander angeordnet, daß zwischen dem Anlenkpunkt des ersten Endes des Dämpfers und/oder Federelementes 5 und der Stelle, an der die Verlängerung der zweiten Schwenkachse 7 eine den Anlenkpunkt enthaltende horizontale Ebene schneidet, ein Abstand dx in Längsrichtung des Lenkers 2 und ein Abstand dy in Querrichtung des Lenkers 2 vorgesehen ist.

Im teilbeladenen Zustand des Fahrzeuges kann der Abstand dx beispielsweise gleich Null und der Abstand dy ungleich Null sein, wodurch das einer Schwenkung des Schwenkarmes 6 entgegenwirkende Moment kleiner ist, als wenn beide Abstände dx, dy gleich Null sind.

Bei dem lediglich als Beispiel aufzufassenden dargestellten Fall sind die Abstände dx, dy derart gewählt, daß eine Schwenkung des Schwenkarms 6 bezogen auf die Zeichnung nach rechts dazu führt, daß die Länge des Dämpfer- und/oder Federelementes 5 sich etwas vergrößert, wodurch das zur Schwenkung erforderliche Moment verringert wird.

Obwohl dies nicht dargestellt ist, ist es weiterhin denkbar, daß der Anlenkpunkt, an dem das Dämpfer- und/oder Federelement 5 am Fahrzeugaufbau 4 angreift, längs und/oder quer zur Fahrzeuglängsachse verstellbar ist, um für den speziellen Anwendungsfall erwünschte Ortskurven und/oder Werte von dx, dy zu ermöglichen. Um die erwünschten Bewegungen zu ermöglichen, sind die Enden des Dämpfer- und/oder Federelementes 5 vorzugsweise über sphärische Lager 5', 5'' verbunden.

Die Verwendung des erfindungsgemäßen Federungssystems ist nicht auf Fahrzeuge mit Längslenkern beschränkt, sondern kann mit den unterschiedlichsten bekannten Radaufhängungen kombiniert werden.

Die variable Übersetzung kann dabei auf eine oder mehrere zentrale Schraubenfedern oder auf je eine oder mehrere Schraubenfedern pro Achshälfte und/oder auf je einen Dämpfer oder eine Schraubenfeder-Dämpfer-Einheit pro Achshälfte angewendet werden.

Selbstverständlich sind auch separate Trag- oder Zusatzfedern denkbar, wobei durch den Einsatz mehrerer Federn stark nichtlineare Federkennlinien erzielt werden können und somit neben einer Variation der Federhärte auch eine Variation der Charakteristik der Kennlinie in Abhängigkeit der Beladung möglich ist.

Die variable Übersetzung kann auch auf die Stabilisatorwirkung angewendet werden, indem die üblicherweise über Gummilager angebrachten Verbindungsstreben zwischen den Stabilisatorenden und der Radaufhängung nicht direkt an der Radaufhängung sondern ebenfalls an den Schwenkarmen angebracht werden. Wird die Stabilisatoranlenkung, bezogen auf die Schwenkachse, gegenüber von der Schraubenfeder- und/oder dem Stoßdämpferanlenkpunkt angeordnet, so kann auch eine mit zunehmender Beladung abnehmende Stabilisatorwirkung erzielt werden. Bei bestimmten Fahrzeugkonzepten kann mit dieser Anordnung das Eigenlenkverhalten im beladenen Zustand verbessert werden.

Wie bereits erwähnt, kann die Verstellung der Anlenkpunkte entweder nur achsseitig oder achs- und fahrzeugaufbauseitig erfolgen.

Die Verbindung zwischen achsseitigem Anlenkpunkt der Federung und/oder Dämpfung und Radführung mit einem Freiheitsgrad kann statt über Schwenkarme auch über Kulissenführungen erfolgen. In diesem Fall ist eine entsprechende Vorrichtung zur Fixierung des achsseitigen Anlenkpunktes in den unterschiedlichen Stellungen in der Kulissenführung einzusetzen. Für den mechanischen Aufbau der Arretier- bzw. Feststelleinrichtungen können unterschiedlichste bekannte Lösungen gewählt werden. Die Betätigung dieser Vorrichtungen kann beispielsweise mit fahrzeugseitiger Energie (elektrisch, pneumatisch oder hydraulisch) oder von Hand (z.B. mechanisch gekoppelt mit der Handbremse) erfolgen.

## Patentansprüche

1. Federungssystem, insbesondere für Kraftfahrzeuge,
mit einem um eine erste Schwenkachse (3) schwenkbar am Fahrzeugaufbau (4) festgelegten Lenker (2) an dessen freiem Ende zumindest ein Rad (1) drehbar gelagert ist,
mit zumindest einem Dämpfer- und/oder Federelement (5), wobei ein erstes Ende des Dämpfer- und/oder Federelementes (5) mit einem Anlenkpunkt am Fahrzeugaufbau (4) in Verbindung steht,
mit einem Stellelement (6), über das der Lenker (2) mit dem zweiten Ende des Dämpfer- und/oder Federelementes (5) derart in Verbindung steht, daß die wirksame Länge eines Hebelarmes, mit dem das Dämpfer- und/oder Federelement (5) zur Abstützung auf den Lenker (2) um seine Schwenkachse (3) einwirkt, verändert werden kann, um über eine Veränderung der Länge des Hebelarmes die Federungseigenschaften des Federungssystems zu beeinflussen,
und mit einem Kraftübertragungselement (9), das Kräfte, die ein Ein- oder Ausfedern des Rades (1) verursachen, auf das Stellelement (6) überträgt, wobei das Kraftübertragungselement (9) eine variable Länge und eine Feststelleinrichtung (10) aufweist, die für die Zeit ihrer Aktivierung eine Längenveränderung des Kraftübertragungselementes (9) verhindert,
**dadurch gekennzeichnet,**
**daß** das Stellelement durch einen Schwenkarm (6) gebildet ist, dessen eines Ende um eine zweite Schwenkachse (7) schwenkbar mit dem Lenker (2) in Verbindung steht,
**daß** das zweite Ende des Dämpfer und/oder Federelementes (5) mit dem zweiten Ende des Schwenkarms (6) verbunden ist, wobei die Länge des wirksamen Hebelarmes zwischen dem zweiten Ende des Dämpfer- und/oder Federelementes (5) und dem Lenker (2) derart verändert wird, daß dieser bei steigender Belastung verlängert wird, während er bei sinkender Belastung verkürzt wird,
**daß** sich das Kraftübertragungselement (9) zwischen dem Fahrzeugaufbau (4) und dem Schwenkarm (6) erstreckt,
und **daß** der Schwenkarm (6) eine lösbare Arretiereinrichtung (8) aufweist, die im gelösten Zustand ein Schwenken des Schwenkarmes (6) um die zweite Schwenkachse (7) ermöglicht, während sie im arretierten Zustand ein Schwenken des Schwenkarmes (6) um die zweite Schwenkachse (7) verhindert.

2. Federungssystem nach Anspruch 1,
**dadurch gekennzeichnet, daß** die Feststelleinrichtung (10) aktiviert ist wenn die Arretiereinrichtung (8) gelöst ist, und umgekehrt.

3. Federungssystem nach Anspruch 1 oder 2,
**dadurch gekennzeichnet, daß** Aktivierung und/oder die Deaktivierung der Feststelleinrichtung (10) und/oder die Arretierung und/ oder Entarretierung der Arretiereinrichtung (8) automatisch in Abhängigkeit von einem oder mehreren Betriebszuständen des Fahrzeuges erfolgt.

4. Federungssystem nach Anspruch 3,
**dadurch gekennzeichnet, daß** es sich bei den Betriebszuständen um die Betätigung eines Bedienelementes, den Zustand einer ) Zündschloßstellung, den offenen und/oder geschlossenen Zustand von Türen und/oder Ladeluken, die Betätigung einer Feststellbremse, die Geschwindigkeit des Fahrzeuges oder die Beladung des Fahrzeuges handelt.

5. Federungssystem nach einem der Ansprüche 1 bis 4,
**dadurch gekennzeichnet, daß** die Arretiereinrichtung (8) im arretierten Zustand eine form- und/oder kraftschlüssige Verbindung zwischen dem Schwenkarm (6) und dem Lenker (2) herstellt.

6. Federungssystem nach einem der Ansprüche 1 bis 5,
**dadurch gekennzeichnet, daß** zwischen dem Anlenkpunkt des ersten Endes des Dämpfer- und/oder Federelementes (5) und der Stelle, an der die Verlängerung der zweiten Schwenkachse (7) eine den Anlenkpunkt enthaltende horizontale Ebene schneidet, ein Abstand (dx) in Längsrichtung des Lenkers (2) und ein Abstand (dy) in Querrichtung des Lenkers (2) vorgesehen ist, wobei zumindest einer der Abstände (dx;dy) im entladenen Zustand des Fahrzeugs ungleich Null ist.

7. Federungssystem nach Anspruch 6,
**dadurch gekennzeichnet, daß** zumindest einer der Abstände (dx;dy) derart ungleich Null ist, daß das einer Schwenkung des Schwenkarmes (6) entgegenwirkende Moment kleiner ist als wenn beide Abstände (dx,dy) gleich Null sind.

8. Federungssystem nach Anspruch 7,
**dadurch gekennzeichnet, daß** im teilbeladenen Zustand des Fahrzeuges der Abstand (dx) gleich Null ist, während der Abstand (dy) ungleich Null ist.

9. Federungssystem nach einem der vorhergehenden Ansprüche,
**dadurch gekennzeichnet, daß** der Anlenkpunkt des ersten Endes des Dämpfer- und/oder Federelementes (5) in Längs- und/oder Querrichtung des Fahrzeuges verstellbar ist.

10. Federungssystem nach einem der vorhergehenden Ansprüche,
**dadurch gekennzeichnet, daß** das erste Ende des Dämpfer- und/oder Federelementes (5) über ein erstes sphärisches Lager (5') mit dem Fahrzeugaufbau (4) verbunden ist.

11. Federungssystem nach einem der vorhergehenden Ansprüche,
**dadurch gekennzeichnet, daß** das zweite Ende des Dämpfer- und/ oder Federelementes (5) über ein zweites sphärisches Lager (5") mit dem Stellelement (6) verbunden ist.

## Claims

1. Suspension system, more particularly one for motor vehicles,
having a suspension link (2) fixed to the vehicle body (4) so as to pivot about a first swivelling axis (3) and at the free end of which at least one wheel (1) is mounted for rotation,
having at least one shock absorber member and/or spring member (5), a first end of the shock absorber member and/or spring member (5) communicating with an articulation point on the vehicle body (4),
having a final control element (6) via which the suspension link (2) communicates with the second end of the shock absorber member and/or spring member (5) in such a manner that the effective length of a lever arm by means of which the shock absorber member and/or spring member (5) acts to provide support on the suspension link (2) about the swivelling axis (3) thereof can be varied in order to influence the spring characteristics of the suspension system by the agency of varying the length of the lever arm,
and having a force transmitting element (9) which transmits to the final control element (6) forces causing compression or rebound travel of the wheel (1), the force transmitting element (9) having a variable length and a parking device (10) which for the period of its activation prevents the force transmitting element (9) from being varied in length,
**characterised in that**
the final control element is formed by a pivot arm (6) one end of which communicates with the suspension link (2) in pivotable manner about a second swivelling axis (7),
the second end of the shock absorber member and/or spring member (5) is joined to the second end of the pivot arm (6), and the length of the effective lever arm between the second end of the shock absorber member and/or spring member (5) and the suspension link (2) is varied in such a manner that the latter is lengthened whenever the load is increasing, whereas it is shortened whenever the load is decreasing,
the force transmitting element (9) extends between the vehicle body (4) and the pivot arm (6),
and the pivot arm (6) has a releasable locking device (8) which when released makes it possible for the pivot arm (6) to pivot about the second swivelling axis (7), whereas in the locked state it prevents the pivot arm (6) from pivoting about the second swivelling axis (7).

2. Suspension system according to claim 1,
**characterised in that** the parking device (10) is activated whenever the locking device (8) is released, and *vice versa.*

3. Suspension system according to claim 1 or 2,
**characterised in that** the activation and/or deactivation of the parking device (10) and/or the locking and/or unlocking of the locking device (8) takes place automatically in dependence upon one or more operating states of the vehicle.

4. Suspension system according to claim 3,
**characterised in that** the operating states are the actuation of a control, the state of an ignition lock setting, the open and/or closed state of doors and/or loading hatches, the actuation of a parking brake, the speed of the vehicle or the load of the vehicle.

5. Suspension system according to any of claims 1 to 4,
**characterised in that** in the locked state the locking device (8) makes a positive and/or frictional connection between the pivot arm (6) and the suspension link (2).

6. Suspension system according to any of claims 1 to 5,
**characterised in that** between the articulation point of the first and of the shock absorber member and/or spring member (5) and the point at which the extension of the second swivelling axis (7) intersects a horizontal plane containing the articulation point, there are provided a spacing (dx) in the longitudinal direction of the suspension link (2) and a spacing (dy) in the transverse direction of the suspension link (2), at least one of the spacings (dx; dy) being other than zero when the vehicle is the unladen state.

7. Suspension system according to claim 6,
**characterised in that** at least one of the spacings (dx; dy) is other than zero in such a manner that the moment counteracting a pivoting action of the pivot arm (6) is smaller than if the two spacings (dx, dy) are equal to zero.

8. Suspension system according to claim 7,
**characterised in that** when the vehicle is in the partially laden state the spacing (dx) is equal to zero, whereas the spacing (dy) is other than zero.

9. Suspension system according to any of the preceding claims, **characterised in that** the articulation point of the first end of the shock absorber member and/or spring member (5) is adjustable in the longitudinal and/or transverse direction of the vehicle.

10. Suspension system according to any of the preceding claims, **characterised in that** the first end of the shock absorber member and/or spring element (5) is joined to the vehicle body (4) via a first spherical bearing (5').

11. Suspension system according to any of the preceding claims, **characterised in that** the second end of the shock absorber member and/or spring member (5) is joined to the final control element (6) via a second spherical bearing (5").

## Revendications

1. Système de suspension, notamment pour véhicules, muni d'une bielle (2) de liaison fixée de manière pivotante autour d'un premier axe de pivotement (3) sur le châssis du véhicule, sur l'extrémité libre de laquelle bielle est placée au moins une roue (1) de manière pivotante, et muni d'au moins un élément amortisseur et/ou à ressort (5), une première extrémité de l'élément amortisseur et/ou à ressort (5) étant en liaison avec un point articulé sur la carrosserie du véhicule (4), et muni d'un élément de réglage (6), à l'aide duquel la bielle (2) est en liaison avec la seconde extrémité de l'élément amortisseur et/ou à ressort (5) de telle sorte que la longueur effective d'un bras de levier, coopérant avec l'élément amortisseur et/ou à ressort (5) pour soutenir la bielle (2) autour de son axe de rotation (3), peut être modifiée pour agir sur les propriétés de suspension du système de suspension à l'aide d'une modification de la longueur du bras de levier, et muni d'un élément de transmission de force (9) qui transmet les forces provoquant la compression et la décompression de la roue (1) à l'élément de réglage (6), l'élément de transmission de force (9) présentant une longueur variable et un dispositif de réglage (10) qui empêche une modification de la longueur de l'élément de transmission de force (9) pendant son activation, **caractérisé en ce que** l'élément de réglage est formé par un bras pivotant (6) dont l'une des extrémités est en liaison de façon pivotante avec la bielle (2) autour d'un deuxième axe de pivotement (7), **en ce que** la seconde extrémité de l'élément amortisseur et/ou à ressort (5) est raccordée à la seconde extrémité du bras pivotant (6), la longueur effective du bras de levier étant modifiée entre la seconde extrémité de l'élément amortisseur et/ou à ressort (5) et la bielle (2) de telle sorte que celui-ci est prolongé au fur et à mesure que la charge augmente, alors qu'il est raccourci lorsque la charge diminue, **en ce que** l'élément de transmission de force (9) s'étend entre la carrosserie du véhicule (4) et le bras pivotant (6), et **en ce que** le bras pivotant (6) présente un dispositif de blocage (8) amovible qui permet, à l'état desserré, un pivotement du bras pivotant (6) autour du deuxième axe de pivotement (7), alors qu'il empêche, à l'état bloqué, un pivotement du bras pivotant (6) autour du deuxième axe de pivotement (7).

2. Système de suspension selon la revendication 1, **caractérisé en ce que** le dispositif de réglage (10) est activé lorsque le dispositif de blocage (8) est desserré, et vice versa.

3. Système de suspension selon la revendication 1 ou 2, **caractérisé en ce que** l'activation et/ou la désactivation du dispositif de réglage (10) et/ou le blocage et/ou le déblocage du dispositif de blocage (8) s'effectue automatiquement en fonction d'un ou plusieurs états de fonctionnement du véhicule.

4. Système de suspension selon la revendication 3, **caractérisé en ce qu**'il s'agit, dans le cas des états de fonctionnement, de l'activation d'un élément de commande, de l'état d'une position d'une serrure de contact d'allumage, de l'état ouvert et/ou fermé de portières et/ou de coffres, de l'activation d'un frein de stationnement, de la vitesse du véhicule ou du chargement du véhicule.

5. Système de suspension selon l'une des revendications 1 à 4, **caractérisé en ce que** le dispositif de blocage (8) établit une liaison, à l'état arrêté, entre le bras pivotant (6) et la bielle (2) par conjonction de forme et/ou par adhérence.

6. Système de suspension selon l'une des revendications 1 à 5, **caractérisé en ce qu**'un écart (dx) dans le sens longitudinal de la bielle (2) et un écart (dy) dans le sens transversal de la bielle (2) sont prévus entre le point d'articulation de la première extrémité l'élément amortisseur et/ou à ressort (5) et le point auquel le prolongement du deuxième axe de pivotement (7) coupe un niveau horizontal (6) contenant le point d'articulation, au moins un des écarts (dx ; dy) étant différent de zéro lorsque le véhicule est déchargé.

7. Système de suspension selon la revendication 6, **caractérisé en ce qu'**au moins un des écarts (dx; dy) est différent de zéro de telle sorte que le moment agissant à l'opposé d'un pivotement du bras de pivotement (6) est plus petit que lorsque les deux écarts (dx ; dy) sont égaux à zéro.

8. Système de suspension selon la revendication 7, **caractérisé en ce que**, lorsque le véhicule est partiellement chargé, l'écart (dx) est égal à zéro, alors que l'écart (dy) est différent de zéro.

9. Système de suspension selon l'une des revendications précédentes, **caractérisé en ce que** le point d'articulation de la première extrémité de l'élément amortisseur et/ou à ressort (5) est réglable en sens longitudinal et/ou en sens transversal.

10. Système de suspension selon l'une des revendications précédentes, **caractérisé en ce que** la première extrémité de l'élément amortisseur et/ou à ressort (5) est raccordé à la carrosserie du véhicule (4) par l'intermédiaire d'un premier palier (5') sphérique.

11. Système de suspension selon l'une des revendications précédentes, **caractérisé en ce que** la deuxième extrémité de l'élément amortisseur et/ou à ressort (5) est raccordée à l'élément de réglage (6) par l'intermédiaire d'un deuxième palier (5") sphérique.
